# EUROPÄISCHE PATENTSCHRIFT

(11) **EP 1 215 334 B1**
(45) Veröffentlichungstag und Bekanntmachung des Hinweises auf die Patenterteilung: **12.04.2006**
(21) Anmeldenummer: 01122339.3
(22) Anmeldetag: 19.09.2001
(51) Int. Cl.: D21B 1/32

(54) **Verfahren zum Auflösen und Reinigen von störstoffhaltigen Papierfaserrohstoffen insbesondere von Altpapier**
Process for pulping and cleaning of fibrous material containing impurities in particular waste paper
Procédé pour la mise en pâte et l'épuration de matière fibreuse contenant des impuretés, en particulier des vieux papiers

(30) Priorität: 16.12.2000 DE 10063014
(43) Veröffentlichungstag der Anmeldung: 19.06.2002
(73) Patentinhaber: Voith Paper Patent GmbH, 89522 Heidenheim (DE)
(72) Erfinder: Danger, Michael, 88682 Salem (DE); Respondek, Peter, 88213 Ravensburg (DE); Rienecker, Reimund, 89522 Heidenheim (DE); Schabel, Samuel, Dr., 88212 Ravensburg (DE)

(56) Entgegenhaltungen:
- EP-A- 0 147 564
- DE-A- 2 949 029
- DE-A- 3 334 448
- GB-A- 2 061 343

## Beschreibung

Die Erfindung bezieht sich auf ein Verfahren zum Auflösen und Reinigen von störstoffhaltigen Papierfaserrohstoffen gemäß dem Oberbegriff des Anspruchs 1, (siehe zum Beispiel das Dokument EP-A-0147564).

Bekanntlich werden in einem großen Umfang Papierfaserrohstoffe zur Papierherstellung verwendet, welche einen mehr oder weniger großen Anteil an Störstoffen enthalten. Derartige Störstoffe sind überwiegend Kunststoffteile und -folien, Drähte, Metallstücke, Glasscherben, Sand etc. Selbstverständlich sollen die Störstoffe möglichst vollständig entfernt werden. Zum einen, um die zur Bearbeitung benutzten Maschinen vor Verschleiß zu schützen und zum anderen wegen der Qualitätsanforderungen an das später hergestellte Papier.

Bewährt haben sich Verfahren, bei denen der Papierfaserrohstoff zuerst bei einem Trockengehalt von mehr als 8 % aufgelöst wird. Das heißt, nach Vermischung mit Wasser wird der Rohstoff durch mechanische Bearbeitung zerteilt, wobei infolge des Quellens der Papierfaserrohstoffe diese zerfallen, während ein großer Teil der Störstoffe seine Festigkeit beibehält. Dadurch bleiben z.B. Plastikfolien relativ großflächig erhalten, und die Papierbahnen können in Einzelfasern oder Stippen zerlegt werden. Wenn dieser Zustand erreicht ist, wird weiteres Wasser zugegeben, so dass eine Suspension entsteht, die in der Regel pumpfähig ist und einen relativ hohen Anteil von Störstoffen enthält. Daher nimmt der nachfolgende Siebapparat eine stark verunreinigte Suspension auf. Durch das darin vorhandene Sieb hindurch können Faserbestandteile, welche keine groben Störstoffe mehr enthalten, als Gutstoff-Fraktionen abgezogen werden, was dazu führt, dass sich die innerhalb des Sortierapparates zurückbleibende Suspension - die also nicht als Gutstoff abgeführt wird - ständig mit Störstoffen anreichert. Das kann zu Störungen des Betriebes und zu Qualitätseinbußen durch verminderten Sortiereffekt führen. Werden solche Siebapparate taktweise gespült, leidet die Gleichmäßigkeit des Produktionsablaufes. Daher sind relativ große Maschinen erforderlich.

Der Erfindung liegt die Aufgabe zugrunde, ein Verfahren der angegebenen Art zu schaffen, das auch bei größeren Schmutzmengen einen sicheren störungsfreien Betrieb ermöglicht.

Diese Aufgabe wird durch die im Kennzeichen des Anspruchs 1 genannten Merkmale vollständig gelöst.

Durch die beschriebenen Maßnahmen wird der Betrieb der das Verfahren ausführenden Anlage wesentlich verbessert. Es ist nämlich möglich, am Grobstoffsortierer einen schon gut gereinigten Gutstoff abzuziehen, der vorzugsweise kontinuierlich, also in der Regel ununterbrochen, zur Verfügung steht. Während des Ausschleusens der nachgeschalteten Sortiervorrichtung übernimmt der Grobstoffsortierer die gesamte Produktion. Der Gutstoff der anschließend verwendeten Sortiervorrichtung fällt zwar nicht kontinuierlich an, ist aber mengenmäßig geringer. Seine Sortierqualität kann durch entsprechende Parameter so eingestellt werden, dass er vorwärts geführt werden kann.

Die Erfindung wird beschrieben und erläutert anhand von Zeichnungen. Dabei zeigen:
- Fig. 1: ein Schema einer für das Verfahren geeigneten Anlage;
- Fig. 2: eine Anlagenvariante mit Auflösetrommel;
- Fig. 3: eine Variation des Grobstoffsortierers;
- Fig. 4: ein Beispiel zur Vorsortierung des aufgelösten Faserstoffes.

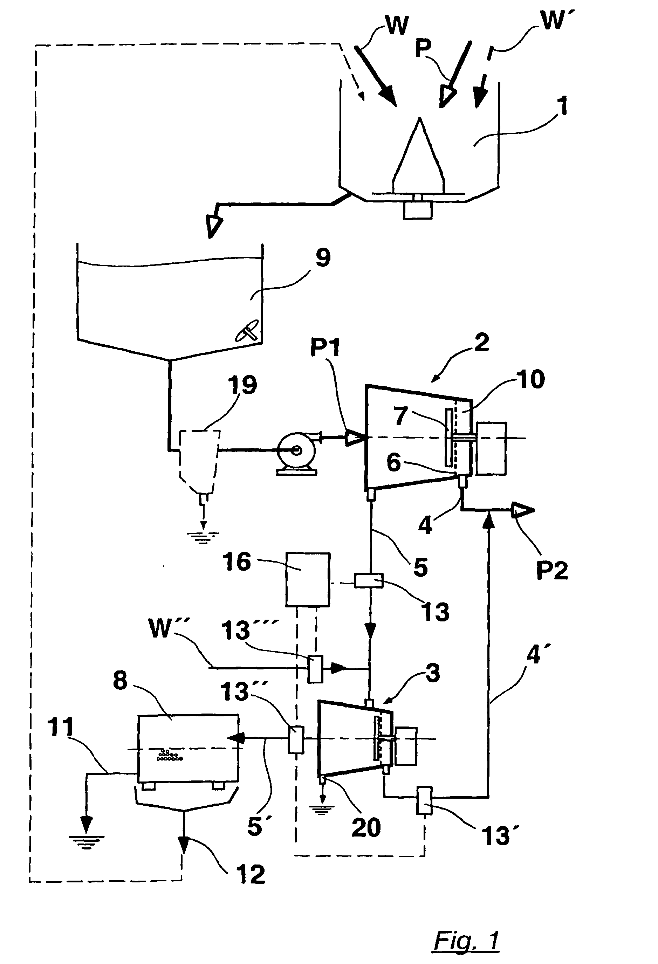

In Fig. 1 erkennt man einen Hochkonsistenzstofflöser 1, in den Papierfaserrohstoff P und Wasser W eingefüllt werden. In an sich bekannter Art und Weise wird der Papierfaserrohstoff P mit dem Wasser W vermischt und bei einem Trockengehalt von mindestens 8 % durch einen Rotor mechanisch bearbeitet. Nach einer gewissen Zeit wird weiteres Verdünnungswasser W' in den Stofflöser zugegeben, wodurch eine Suspension von unter 8 % entsteht, die anschließend in einer Stapelbütte 9 gesammelt wird. Aus dieser wird sie vorzugsweise kontinuierlich abgepumpt und gelangt zunächst in einen Schwerteilabscheider 19 und dann als Suspension P1 in den Grobstoffsortierer 2. Der nur gestrichelt gezeichnete Schwerteilabscheider 19 kann entfallen, wenn das System die nach dem Auflösen enthaltenen groben Störstoffe verkraftet. Der Grobstoffsortierer 2 enthält mindestens ein Sieb 6, hier als Plansieb ausgeführt, welches durch einen Rotor 7 von Verstopfungen freigehalten wird. Die Suspension, die das Sieb 6 passiert hat, sammelt sich im Gutstoffraum 10 und wird als Durchlauffraktion 4 abgeführt. Im Inneren eines Grobstoffsortierers dieser Bauart bildet sich normalerweise eine Rotationsströmung aus, die in ihrem Zentrum auf der dem Rotor 7 gegenüberliegenden Seite einen Sog erzeugt. Dieser Sog kann in bestimmten Fällen genutzt werden, um die Suspension P1 auch ohne eine (verschleißgefährdete) Pumpe aus dem Hochkonsistenzstofflöser 1 einzuleiten.

Die Überlauffraktion 5 des Grobstoffsortierers 2 wird als nächstes in eine weitere Sortiervorrichtung 3 geführt. Diese ist ähnlich aufgebaut wie der Grobstoffsortierer 2, weist hier allerdings einen tangentialen Einlauf am äußeren Umfang auf. Auch in dieser Sortiervorrichtung 3 wird mit Hilfe eines Siebes eine Durchlauffraktion 4' gebildet sowie ein Rückstand von Stoffen, die am Sieb abgewiesen werden. Der Rückstand wird als Überlauffraktion 5' diskontinuierlich aus der Sortiervorrichtung 3 ausgeschleust. Das kann z.B. so erfolgen, dass eine Steuervorrichtung 16 die Ventile 13, 13', 13", 13"' ansteuert. Wenn der Inhalt der Sortiervorrichtung 3 so stark mit Störstoffen angereichert ist, dass diese ausgeschleust werden sollen, schließen die Ventile 13 und 13' und öffnen die Ventile 13" und 13"'. Ein Spülstrom W" fließt durch das Ventil 13"' ein. Mit Vorteil wird dieser Vorgang so lange aufrechterhalten, bis der gesamte in der Sortiervorrichtung 3 angesammelte Rückstand entfernt ist. Über die Dauer des Ausschleusens wird normalerweise das Ventil 13 geschlossen gehalten. Das bedeutet, dass so lange kein Überlauf 5 aus dem Grobstoffsortierer 2 abgezogen wird. Es ist anzustreben, diesen Zeitraum so kurz wie möglich einzustellen (quasi kontinuierlicher Spuckstoffabzug), um die Störstoffaufkonzentration im Grobstoffsortierer in engen Grenzen zu halten. Das Verfahren wird daher so geführt, dass die Überlauffraktion 5 über eine Zeitdauer von mindestens 80 % der Betriebszeit des Grobstoffsortierers entnommen wird.

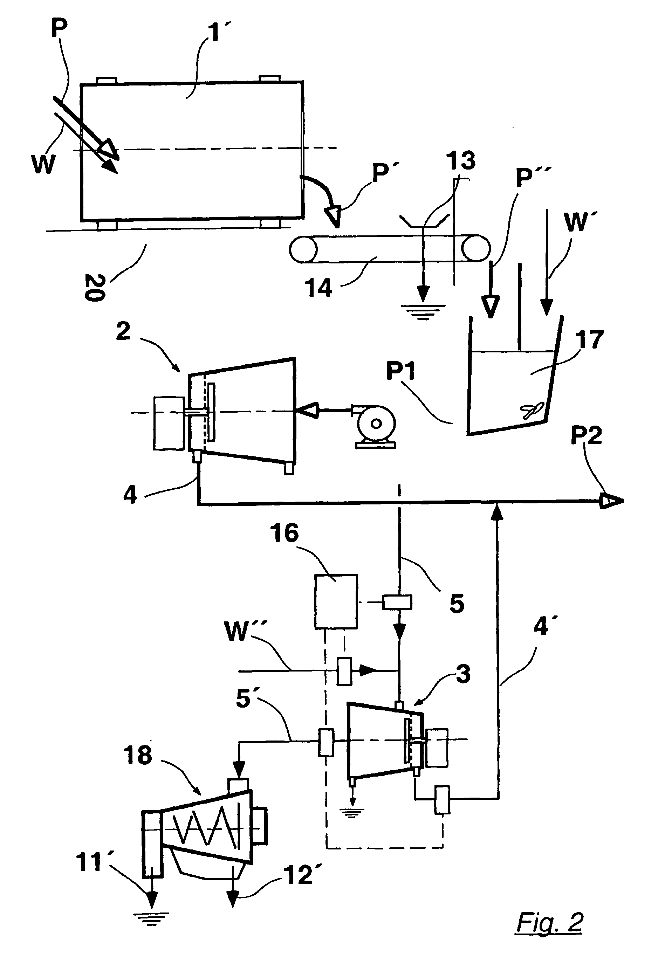

Die Überlauffraktion 5' der Sortiervorrichtung 3 kann, wie hier gezeigt, in eine Sortiertrommel 8 abfließen, in der die Rejektfraktion 11 als Überlauf und eine Durchlauffraktion 12, welche überwiegend Wasser und eventuell Faserstoff enthält, gebildet wird. Wie in Fig. 2 noch genauer dargestellt, sind auch andere Möglichkeiten der Entsorgung der Sortiervorrichtung 3 denkbar. Durch eine Schwerteilschleuse 20 werden Metallstücke, Steine etc. abgeschieden.

Um zu verhindern, dass beim Ausschleusen größere Mengen von Papierfasern mit der Überlauffraktion 5' abfließen, kann vor dem Ausschleusen der Störstoffe ein Spültakt durchgeführt werden. Dabei sind dann die Ventile 13 und 13" zu schließen, während die übrigen Ventile 13', 13"' geöffnet sind. Die Fasern gelangen so mit Hilfe des Spülstromes W" in den Durchlauf 4' der Sortiervorrichtung 3.

In der in Fig. 2 gezeigten Anlage wird der Papierfaserrohstoff P zuerst in einer Auflösetrommel 1' mit Wasser W vermischt und aufgelöst. Eine solche Auflösetrommel arbeitet vorzugsweise kontinuierlich, so dass ein ständiger Strom von aufgelöstem Papierfaserstoff P' am dem Einlauf gegenüberliegenden Axialende überläuft. Dieser ist in der Regel mit Störstoffen stark belastet. Um wenigstens die gröbsten Verunreinigungen zu entfernen, wird er auf einem Verteilband 14 an einem Metalldetektor 15 vorbeigeführt. Diese gezeigte Grobreinigungsstufe ist nur als eine von verschiedenen Möglichkeiten zu verstehen. Sie kann auch entfallen, wenn der Grobstoffsortierer 2 geeignet ist, die anfallenden Verunreinigungen störungsfrei zu verarbeiten. Um den aufgelösten und eventuell vorgereinigten Papierfaserstoff P" weiterverarbeiten zu können, wird er in einem Mischgefäß 17 mit weiterem Verdünnungswasser W' vermischt, bis eine pumpfähige Suspension P1 entsteht, die in der bereits beschriebenen Weise einem Grobstoffsortierer 2 zugeführt wird. Die weitere Bearbeitung der Suspension erfolgt ähnlich, wie bereits in der Fig. 1 geschildert. Abweichend davon wird hier für die Überlauffraktion 5' der Sortiervorrichtung 3 allerdings eine Presse 18 verwendet, mit deren Hilfe sich ein deponierfähiger Rejekt 11' bilden lässt. Dann empfiehlt sich allerdings der bereits erwähnte Spültakt. Das abgepresste Wasser 12' kann z.B. zur Auflösung oder Verdünnung wieder verwendet werden.

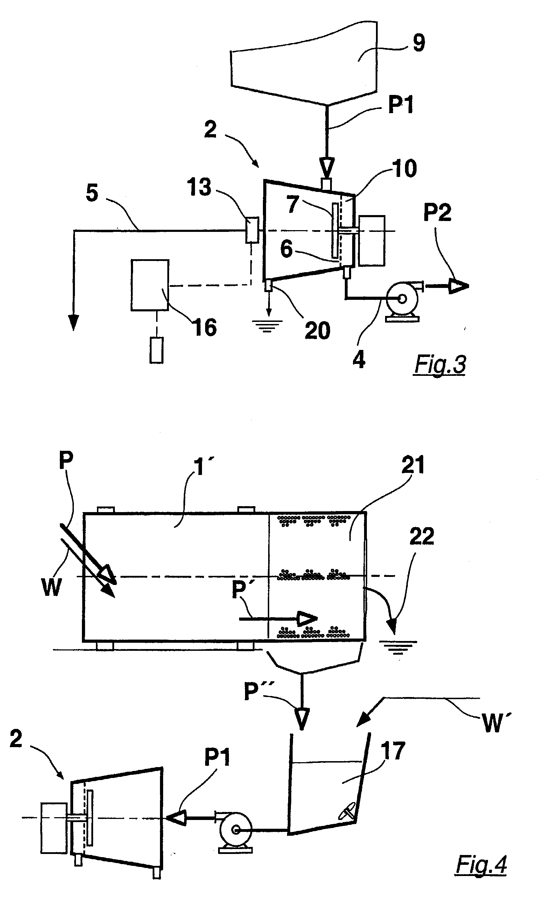

Wie das Beispiel der Fig. 3 zeigt, kann ein Grobstoffsortierer auch so aufgebaut sein, dass der Einlauf der Suspension P1 tangential am äußeren Rand des Gehäuses erfolgt. Es hängt von der Qualität des Papierfaserrohstoffes P und den Verfahrensparametern ab, wie groß die mit der Suspension P1 mitgeschleppten Schwerteile sind. Daher sind auch Anwendungen des Verfahrens vorstellbar, bei denen es möglich ist, alle enthaltenen Schwerteile direkt in den Grobstoffsortierer 2 einzutragen, ohne vorher einen Teil davon entfernen zu müssen. Die Rotationsbewegung der Suspension innerhalb des Gehäuses führt dazu, dass die Schwerteile an der lnnenwand rotieren und wegen der Zentrifugalkraft aufkonzentriert werden. Durch eine Schwerteilschleuse 20 lassen sich diese Teile dann relativ schnell ausleiten, so dass der durch sie verursachte Verschleiß gering bleibt und Störungen nicht auftreten. Durch ein konisches Gehäuse kann der Effekt der Schwerteilabscheidung noch beschleunigt werden. Die beschriebene Schwerteilschleuse 20 ist zwar auch möglich, wenn die Suspension zentral in eine solche Vorrichtung eingeführt wird, die schnellere Abscheidung dürfte aber mit einem Tangentialeinlauf erzielbar sein.

Fig. 4 zeigt eine spezielle Ausgestaltung des erfindungsgemäßen Verfahrens, bei dem wiederum als Auflöseapparatur eine Auflösetrommel 1' verwendet ist. In der dargestellten Form setzt sich die Auflösetrommel 1' axial mit einem Sortierteil 21 fort. Der aufgelöste Papierfaserstoff P' gelangt daher aus der Auflösetrommel 1' in den Sortierteil 21. Dieser ist mit einer Lochung versehen, vorzugsweise ca. 30 mm, welche einen Teil der groben Störstoffe zurückhält und axial als Grobschmutz 22 austrägt. Der vorgereinigte Papierfaserstoff P" passiert die Lochung und kann nun, wie im Zusammenhang mit der Fig. 2 bereits beschrieben, weiterverarbeitet werden.

Der Grobstoffsortierer 2 und die Sortiervorrichtung 3 können, wie bereits erwähnt, im Prinzip ähnlich aufgebaut werden. Auf Grund ihrer unterschiedlichen Funktionen sind sie jedoch konstruktiv unterschiedlich zu optimieren. Auch ihre Größe ist in der Regel unterschiedlich. Oft ist es günstig, die Größe des stromaufwärtigen Grobstoffsortierers 2 so zu wählen, dass dessen zulaufseitiges Volumen, also das vor dem Sieb 6 liegende Volumen, mindestens 15 % des Inhaltes hat, der sich ergibt, wenn man den Durchlauf 4 dieses Grobstoffsortierers über eine Minute aufsummiert. Bei der Größenfestlegung für die stromabwärtige Sortiervorrichtung 3 wird man etwas anders vorgehen. Dessen zulaufseitiges Volumen nimmt mit Vorteil mindestens 30 % des Volumens ein, das sich aus dem Durchlauf durch diese Maschine in einer Minute errechnet. Dahinter steht die Forderung, dass der im Sortierer angereicherte Schmutz einen bestimmten Anteil am Gesamtvolumen nicht übersteigen darf. Dabei ist anzumerken, dass der Durchlauf der stromabwärtigen Sortiervorrichtung beträchtlich kleiner ist als der des stromaufwärtigen Grobstoffsortierers.

## Patentansprüche

1. Verfahren zum Auflösen und Reinigen von störstoffhaltigen Papierfaserrohstoffen (P), insbesondere von Altpapier,
wobei unter Verwendung einer Auflöseapparatur eine störstoffhaltige Suspension (P1) erzeugt wird, die einem geschlossenen Grobstoffsortierer (2) zugeleitet wird, aus dem eine gereinigte Durchlauffraktion(4) sowie eine erhöht störstoffhaltige Überlauffraktion (5) abgezogen wird,
**dadurch gekennzeichnet,**
**dass** die Überlauffraktion (5) aus dem Grobstoffsortierer (2) in einem Zeitraum von mindestens 80 % der Betriebszeit abgezogen wird,
wobei der volumetrische Mengenstrom der Überlauffraktion (5) auf mindestens 15 % und höchstens 50 % des volumentrischen Mengenstromes des Einlaufes in den Grobstoffsortierer (2) eingestellt wird und
**dass** die Überlauffraktion (5) einer weiteren Sortiervorrichtung (3) zugeführt
wird, aus der die darin angesammelten Störstoffe als Überlauffraktion (5') diskontinuierlich ausgeschleust werden und in der eine weitere gereinigte Durchlauffraktion (4') gebildet wird.

2. Verfahren nach Anspruch 1,
**dadurch gekennzeichnet,**
**dass** die Überlauffraktion (5) aus dem Grobstoffsortierer (2) mindestens so lange abgezogen wird, wie keine Störstoffe aus der Sortiervorrichtung (3) ausgeschleust werden.

3. Verfahren nach Anspruch 1 oder 2,
**dadurch gekennzeichnet,**
**dass** die Durchlauffraktion (4) kontinuierlich aus dem Grobstoffsortierer (2) abgezogen wird.

4. Verfahren nach Anspruch 1, 2 oder 3,
**dadurch gekennzeichnet,**
**dass** die Ausschleusung der Störstoffe aus der Sortiervorrichtung (3) **dadurch** erfolgt, dass der Zulauf der Überlauffraktion (5) in diese Sortiervorrichtung (3) gestoppt wird und dass in dieser Zeit ein Spülstrom (W') in die Sortiervorrichtung (3) eingepumpt wird, mit dessen Hilfe die Störstoffe als weitere störstoffhaltige Obertauffraktion (5') zum Abfließen aus der Sortiervorrichtung (3) gebracht werden.

5. Verfahren nach Anspruch 1, 2, 3 oder 4,
**dadurch gekennzeichnet,**
**dass** beim Ausschleusen der gesamte in der Sortiervorrichtung (3) angesammelte Rückstand entfernt wird.

6. Verfahren nach Anspruch 1, 2, 3, 4 oder 5,
**dadurch gekennzeichnet,**
**dass** der Abfluss der Durchlauffraktion (4') aus der Sortiervorrichtung (3) beim Ausschleusen aus dem Grobstoffsortierer (2) gesperrt wird.

7. Verfahren nach einem der voranstehenden Ansprüche,
**dadurch gekennzeichnet,**
**dass** die Durchlauffraktion (4') der Sortiervorrichtung (3) mit der Durchlauffraktion (4) des Grobstoffsortierers (2) zusammengeführt wird.

8. Verfahren nach einem der voranstehenden Ansprüche,
**dadurch gekennzeichnet,**
**dass** die Überlauffraktion (5') der Sortiervorrichtung (3) in eine Sortiertrommel (8) geleitet wird, in der eine Rejektfraktion (11) als Überlauf gebildet wird.

9. Verfahren nach Anspruch 8,
**dadurch gekennzeichnet,**
**dass** die Durchlauffraktion (12) der Sortiertrommel (8) in die Auflöseapparatur zurückgeleitet wird.

10. Verfahren nach einem der Ansprüche 1 bis 7,
**dadurch gekennzeichnet,**
**dass** die Überlauffraktion (5') der Sortiervorrichtung (3) in einer Presse eingedickt wird.

11. Verfahren nach einem der voranstehenden Ansprüche,
**dadurch gekennzeichnet,**
**dass** der volumetrische Mengenstrom der Überlauffraktion (5) am Grobstoffsortierer (2) so eingestellt wird, dass er zwischen 20 und 30 % des volumetrischen Mengenstromes des Einlaufes in den Grobstoffsortierer (2) entspricht.

12. Verfahren nach einem der voranstehenden Ansprüche,
**dadurch gekennzeichnet,**
**dass** der Fasermengenstrom der Überlauffraktion (5') an der Sortiervorrichtung (3) so eingestellt wird, dass er 20 % bis 30 % des Fasermengenstromes im Einlauf zur Sortiervorrichtung (3) beträgt.

13. Verfahren nach einem der voranstehenden Ansprüche,
**dadurch gekennzeichnet,**
**dass** im Grobstoffsortierer (2) ein Sieb eingesetzt wird mit einer Lochweite von höchstens 4 mm.

14. Verfahren nach einem der voranstehenden Ansprüche,
**dadurch gekennzeichnet,**
**dass** im Grobstoffsortierer (2) ein ebenes Sieb eingesetzt wird, das von einem bewegten Siebräumer frei gehalten wird.

15. Verfahren nach einem der voranstehenden Ansprüche,
**dadurch gekennzeichnet,**
**dass** die störstoffhaltige Suspension (P1) zentral in den Grobstoffsortierer (2) eingeführt wird.

16. Verfahren nach einem der voranstehenden Ansprüche,
**dadurch gekennzeichnet,**
**dass** am Grobstoffsortierer (2) Schwerteile über eine Schwerteilschleuse (20) abgeschieden werden.

17. Verfahren nach einem der voranstehenden Ansprüche,
**dadurch gekennzeichnet,**
**dass** zwischen Auflöseapparatur und Grobstoffsortierer (2) keine Störstoffe entfernt werden.

18. Verfahren nach einem der Ansprüche 1 bis 16,
**dadurch gekennzeichnet,**
**dass** zwischen Auflöseapparatur und Grobstoffsortierer (2) nur solche groben Störstoffe entfernt werden, die an einer Sieblochung von höchstens 30 mm Durchmesser abgewiesen werden.

19. Verfahren nach Anspruch 18,
**dadurch gekennzeichnet,**
**dass** die groben Störstoffe mit einer rotierenden Siebtrommel mit einer Lochung von höchstens 30 mm entfernt werden.

20. Verfahren nach einem der voranstehenden Ansprüche,
**dadurch gekennzeichnet,**
**dass** die Auflöseapparatur eine Auflösetrommel (1') ist.

21. Verfahren nach Anspruch 19 und 20,
**dadurch gekennzeichnet,**
**dass** als Siebtrommel eine als Sortierteil (21) dienende, axiale Fortsetzung der Auflösetrommel (1') verwendet wird.

22. Verfahren nach Anspruch 20 oder 21,
**dadurch gekennzeichnet,**
**dass** die Auflösetrommel (1') so betrieben wird, dass ein kontinuierlicher Strom von aufgelöstem Stoff anfällt, der durch Zugabe von weiterem Verdünnungswasser (W') zur störstoffhaltigen Suspension (P1) verdünnt wird.

23. Verfahren nach einem der Ansprüche 1 bis 19,
**dadurch gekennzeichnet,**
**dass** die Auflöseapparatur ein Hochkonsistenzstofflöser (1) ist.

24. Verfahren nach Anspruch 23,
**dadurch gekennzelchnet,**
dass der Hochkonsistenzstofflöser (1) diskontinuierlich betrieben und dass am Ende des Auflösetaktes durch Zugabe von Verdünnungswasser (W') die für den nachfolgenden Grobstoffsortierer (2) gewünschte Konsistenz eingestellt wird.

25. Verfahren nach einem der voranstehenden Ansprüche,
**dadurch gekennzeichnet,**
**dass** das zulaufseitige Innenvolumen des Grobstoffsortierers (2) mindestens 15 % des Volumens einnimmt, welches der volumetrische Mengenstrom des Durchlaufes (4) dieser Maschine in einer Minute füllt.

26. Verfahren nach einem der voranstehenden Ansprüche,
**dadurch gekennzeichnet,**
**dass** das zulaufseitige Innenvolumen der Sortiervorrichtung (3) mindestens 30 % des Volumens einnimmt, welches der volumetrische Mengenstrom des Durchlaufes (4') dieser Maschine in einer Minute füllt.

## Claims

1. Process for pulping and cleaning paper fibre raw materials (P), in particular recycled paper, containing impurities, wherein using a pulping apparatus a suspension (P1) containing impurities is produced, which is supplied to a closed junk grader (2), from which a cleaned through-flow fraction (4) and an overflow fraction (5) with an increased content of impurities are drawn off, **characterised in that** the overflow fraction (5) is drawn from the junk grader (2) over a time span of at least 80% of the operating time, in which case the volumetric mass flux of the overflow fraction (5) is set to at least 15% and at most 50% of the volumetric mass flux of the intake into the junk grader (2) and **in that** the overflow fraction (5) is fed to a further grading apparatus (3), from which the impurities collected therein are discontinuously passed through as the overflow fraction (5') and in which a further cleaned through-flow fraction (4') is formed.

2. Process according to claim 1, **characterised in that** the overflow fraction (5) is drawn from the junk grader (2) at least until no impurities are passed through from the grading apparatus (3).

3. Process according to claim 1 or 2, **characterised in that** the through-flow fraction (4) is drawn off continuously from the junk grader (2).

4. Process according to claim 1, 2 or 3, **characterised in that** the passing of impurities out of the grading apparatus (3) is carried out by stopping the supply of the overflow fraction (5) into this grading apparatus (3) and by pumping a flushing stream (W") into the grading apparatus (3) in this time, so that by means of this stream the impurities are caused to flow out of the grading apparatus (3) as a further overflow fraction (5') containing impurities.

5. Process according to claim 1, 2, 3, or 4, **characterised in that** in allowing the impurities to pass out, the entire residue collected in the grading apparatus (3) is removed

6. Process according to claim 1, 2, 3, 4 or 5, **characterised in that** the discharge of the through-flow fraction (4') from the grading apparatus (3) is blocked while impurities are being passed out from the junk grader (2).

7. Process according to one of the preceding claims, **characterised in that** the through-flow fraction (4') of the grading apparatus (3) is added to the through-flow fraction (4) of the junk grader (2).

8. Process according to one of the preceding claims, **characterised in that** the overflow fraction (5') of the grading apparatus (3) is passed into a grading drum (8), in which a reject fraction (11) is formed as an overflow.

9. Process according to claim 8, **characterised in that** the through-flow fraction (12) of the grading drum (8) is passed back into the pulping apparatus.

10. Process according to one of claims 1 to 7, **characterised in that** the overflow fraction (5') of the grading apparatus (3) is condensed in a press.

11. Process according to one of the preceding claims, **characterised in that** the volumetric mass flux of the overflow fraction (5) at the junk grader (2) is so set that it corresponds to 20 and 30% of the volumetric mass flux of the intake into the junk grader (2).

12. Process according to one of the preceding claims, **characterised in that** the fibre mass flux of the overflow fraction (5') at the grading apparatus (3) is so set that it is 20% to 30% of the fibre mass flux in the intake into the grading apparatus (3).

13. Process according to one of the preceding claims, **characterised in that** in the junk grader (2) a screen is inserted with a hole-width of at most 4 mm.

14. Process according to one of the preceding claims, **characterised in that** in the junk grader (2) a plane screen is inserted, which is kept clear by a moving screen scraper.

15. Process according to one of the preceding claims, **characterised in that** the suspension (P1) containing impurities is introduced concentrically into the junk grader (2).

16. Process according to one of the preceding claims, **characterised in that** at the junk grader (2) heavy components are separated via a sluice (20) for heavy components.

17. Process according to one of the preceding claims, **characterised in that** between the pulping apparatus and the junk grader (2) no impurities are removed.

18. Process according to one of claims 1 to 16, **characterised in that** between the pulping apparatus and the junk grader (2), only coarse impurities are removed which are rejected at a screen perforation of at most 30 mm diameter.

19. Process according to claim 18, **characterised in that** the coarse impurities are removed with a rotary screen drum with a perforation of at most 30 mm.

20. Process according to one of the preceding claims, **characterised in that** the pulping apparatus is a pulping drum (1').

21. Process according to claim 19 and 20, **characterised in that** as a screen drum an axial continuation of the pulping drum (1') is used which acts as a grading part (21).

22. Process according to claim 20 or 21, **characterised in that** the pulping drum (1') is so operated that a continuous stream of pulped material is produced, which is diluted by the addition of further dilution water (W') to form a suspension (P1) containing impurities.

23. Process according to one of claims 1 to 19, **characterised in that** the pulping apparatus is a high-consistency pulper (1).

24. Process according to claim 23, **characterised in that** the high-consistency pulper (1) is operated discontinuously and **in that** at the end of the pulping cycle the consistency desired for the subsequent junk grader (2) is adjusted by adding dilution water (W').

25. Process according to one of the preceding claims, **characterised in that** the inlet-side intemal volume of the junk grader (2) takes up at least 15% of the volume which the volumetric mass flux of the through-flow (4) of this machine supplies in one minute.

26. Process according to one of the preceding claims, **characterised in that** the inlet-side intemal volume of the junk grader (3) takes up at least 30% of the volume which the volumetric mass flux of the through-flow (4') of this machine supplies in one minute.

## Revendications

1. Procédé destiné à la dissolution et à l'épuration de matières premières de fibres de papier (P) contenant des impuretés, notamment de vieux papiers,
une suspension (P1) contenant des impuretés étant engendrée par l'utilisation d'un appareillage de dissolution, et étant amenée à une trieuse de matières grossières (2) fermée, de laquelle est soutirée une fraction de débit (4) épurée ainsi qu'une fraction de trop-plein (5) à teneur élevée en impuretés
**caractérisé en ce que**,
la fraction de trop-plein (5) sortant de la trieuse de matières grossières (2) est soutirée pendant un intervalle de temps d'au moins 80 % de la durée de fonctionnement,
le flux massique volumétrique de la fraction de trop-plein (5) étant réglé au minimum à 15 % et au maximum à 50 % du flux massique volumétrique de l'entrée dans la trieuse de matières grossières (2), et
la fraction de trop-plein (5) est amenée à un autre dispositif de tri (3), duquel les impuretés qui s'y sont accumulées sont évacuées en discontinu en tant que fraction de trop-plein (5'), et dans lequel est engendrée une autre fraction de débit (4') épurée.

2. Procédé selon la revendication 1,
**caractérisé en ce que**
la fraction de trop-plein (5) est soutirée de la trieuse de matières grossières (2) au moins aussi longtemps que des impuretés ne sont pas évacuées du dispositif de tri (3).

3. Procédé selon la revendication 1 ou 2,
**caractérisé en ce que**
la fraction de débit (4) est soutirée en continu de la trieuse de matières grossières (2).

4. procédé selon la revendication 1, 2 ou 3,
**caractérisé en ce que**
l'évacuation des impuretés du dispositif de tri (3) est effectuée par le fait que l'entrée de la fraction de trop-plein (5) dans ce dispositif de tri (3) est stoppée et que, pendant ce temps, un courant de rinçage (W") est pompé dans le dispositif de tri (3), à l'aide duquel les impuretés sont évacuées du dispositif de tri (3) en tant qu'autre fraction de trop-plein (5') contenant des impuretés.

5. Procédé selon la revendication 1, 2, 3 ou 4,
**caractérisé en ce que,**
lors de l'évacuation, la totalité du résidu accumulé dans le dispositif de tri (3) est éliminée.

6. Procédé selon la revendication 1, 2, 3, 4 ou 5,
**caractérisé en ce que**,
lors de l'évacuation hors de la trieuse de matières grossières (2), l'écoulement de la fraction de débit (4') sortant du dispositif de tri (3) est arrêté.

7. Procédé selon l'une des revendications précédentes,
**caractérisé en ce que**
la fraction de débit (4') du dispositif de tri (3) est regroupée avec la fraction de débit (4) de la trieuse de matières grossières (2).

8. Procédé selon l'une des revendications précédentes,
**caractérisé en ce que**
la fraction de trop-plein (5') du dispositif de tri (3) est déversée dans un tambour de tri (8), dans lequel une fraction de rejet (11) est engendrée en tant que trop-plein.

9. Procédé selon la revendication 8,
**caractérisé en ce que**
la fraction de débit (12) du tambour de tri (8) est recyclée dans l'appareillage de dissolution.

10. Procédé selon l'une des revendications 1 à 7,
**caractérisé en ce que**
la fraction de trop-plein (5') du dispositif de tri (3) est épaissie dans une presse.

11. Procédé selon l'une des revendications précédentes,
**caractérisé en ce que**
le flux massique volumétrique de la fraction de trop-plein (5) est réglé au niveau de la trieuse de matières grossières (2) de telle sorte qu'il soit compris entre 20 % et 30 % du flux massique volumétrique de l'entrée dans la trieuse de matières grossières (2).

12. Procédé selon l'une des revendications précédentes,
**caractérisé en ce que**
le flux massique des fibres de la fraction de trop-plein (5') est réglé au niveau du dispositif de tri (3) de telle sorte qu'il soit compris entre 20 % et 30 % du flux massique des fibres de l'entrée dans le dispositif de tri (3) .

13. Procédé selon l'une des revendications précédentes,
**caractérisé en ce que**
un crible d'un diamètre de trous de 4 mm maximum est utilisé dans la trieuse de matières grossières (2).

14. Procédé selon l'une des revendications précédentes,
**caractérisé en ce que**
un crible plat est utilisé dans la trieuse de matières grossières (2), qui est maintenu dégagé par un racleur mobile de crible.

15. Procédé selon l'une des revendications précédentes,
**caractérisé en ce que**
la suspension (P1) contenant des impuretés est introduite de façon centrale dans la trieuse de matières grossières (2).

16. Procédé selon l'une des revendications précédentes,
**caractérisé en ce que**
des particules lourdes sont éliminées dans la trieuse de matières grossières (2) par l'intermédiaire d'un sas (20) de particules lourdes.

17. Procédé selon l'une des revendications précédentes,
**caractérisé en ce que**,
entre l'appareillage de dissolution et la trieuse de matières grossières (2), il n'est pas éliminé d'impuretés.

18. Procédé selon l'une des revendications 1 à 16,
**caractérisé en ce que**,
entre l'appareillage de dissolution et la trieuse de matières grossières (2), ne sont éliminées que des impuretés grossières qui sont refusées par une perforation de criblage d'un diamètre maximal de 30 mm.

19. Procédé selon la revendication 18,
**caractérisé en ce que**
les impuretés grossières sont éliminées avec un tambour de criblage rotatif muni d'une perforation de 30 mm maximum.

20. Procédé selon l'une des revendications précédentes,
**caractérisé en ce que**
l'appareillage de dissolution est un tambour de dissolution (1').

21. Procédé selon les revendications 19 et 20,
**caractérisé en ce que**
un prolongement axial du tambour de dissolution (1') servant d'élément de tri (21) est utilisé en tant que tambour de criblage.

22. Procède selon la revendication 20 ou 21,
**caractérisé en ce que**
le tambour de dissolution (1') fonctionne de façon à engendrer un flux continu de matière dissoute qui, par l'ajout d'eau de dilution (w') supplémentaire, est dilué en la suspension (P1) contenant des impuretés.

23. Procédé selon l'une des revendications 1 à 19,
**caractérisé en ce que**
l'appareillage de dissolution est un pulper (1) de matière de haute consistance.

24. Procédé selon la revendication 23,
**caractérisé en ce que**
le pulper (1) de matière de haute consistance fonctionne en discontinu, et **en ce que** la consistance souhaitée pour la trieuse de matières grossières (2) placée en aval est réglée à la fin du cycle de dissolution par l'ajout d'eau de dilution (W').

25. Procédé selon l'une des revendications précédentes,
**caractérisé en ce que**
le volume intérieur situé du côté de l'entrée de la trieuse de matières grossières (2) occupe au moins 15 % du volume qui est rempli en une minute par le flux massique volumétrique du débit (4) de cette machine.

26. Procédé selon l'une des revendications précédentes,
**caractérisé en ce que**
le volume intérieur situé du côté de l'entrée du dispositif de tri (3) occupe au moins 30 % du volume qui est rempli en une minute par le flux massique volumétrique du débit (4') de cette machine.
